# EUROPEAN PATENT APPLICATION

(11) **EP 3 611 686 A1**
(43) Date of publication of application: **19.02.2020**
(21) Application number: 18784042.6
(22) Date of filing: 09.04.2018
(51) Int. Cl.: G06Q 30/06, G06F 17/30

(54) **FRAGRANCE PRODUCT PROPOSAL SYSTEM**

(30) Priority: 13.04.2017 JP 2017080123
(71) Applicant: Shiseido Company, Ltd., Tokyo 104-0061 (JP)
(72) Inventor: SHOJI Ken, Yokohama-shi Kanagawa 224-8558 (JP)
(74) Representative: Ter Meer Steinmeister & Partner
(86) International application number: PCT/JP2018/014870
(87) International publication number: WO 2018/190287

(57) **Abstract**

Provided is a fragrance product proposal system which allows a consumer to easily select an optimum fragrance product for the consumer from many commercially available fragrance products on the screen of a general-purpose computer such as a personal computer through a communication medium such as the Internet. The fragrance product proposal system for proposing a fragrance product to the user implements indicating at least two keywords simultaneously or sequentially on the screen of a user terminal, selecting one or more fragrance products from fragrance products stored in a database based on information input by the user, and displaying the selected one or more products on the screen of the user terminal.

## Description

### [Technical Field]

The present invention relates to a fragrance product proposal system for selecting an optimum fragrance product for a user from many commercially available fragrance products and introducing the selected product to the user.

### [Background Art]

In many instances, when a consumer newly buys a fragrance product or makes a replacement purchase for the fragrance product the consumer has used, the consumer studies about products in advance according to an image of an ideal person for example through magazines including evaluations of various fragrance products or product catalogues to narrow down product candidates or visits shops to get informed about product candidates by clerks, and determines which product to purchase.

However, it may not be easy for a general consumer to associate the image of an ideal person and the image of the scent of a fragrance product, and it takes time and effort to select an optimum fragrance product from many fragrance products.

Therefore, there has been a demand for a system for proposing a fragrance product which allows a general consumer to easily select an optimum fragrance product from many commercially available fragrance products on the screen of a general-purpose computer such as a personal computer through a communication medium such as the Internet.

### [Citation List]

### [Patent Literature]

[PTL 1] Japanese Patent Application Publication No. 2002-15184

### [Summary of Invention]

### [Technical Problem]

It is an object of the present invention to provide a fragrance product proposal system which allows a consumer to easily select a fragrance product optimum for the consumer from many commercially available fragrance products on the screen of a general-purpose computer such as a personal computer through a communication medium such as the Internet.

### [Solution to Problem]

The inventor has conducted studies to solve the problem and found that a user is allowed to easily select an optimum fragrance product when at least two keywords are simultaneously or sequentially indicated on the screen of a user terminal to encourage the user to input information, one or more fragrance products are selected from fragrance products stored in a database based on the information input by the user, and the selected one or more products are displayed on the screen of the user terminal, and the inventor has completed the present invention on the basis of the findings.

More specifically, the present invention concerns a fragrance product proposal system for proposing a fragrance product to a user, the system implementing indicating at least two keywords simultaneously or sequentially on the screen of a user terminal, selecting one or more fragrance products from fragrance products stored in a database based on information input by the user, and displaying the selected one or more products on the screen of the user terminal.

In the fragrance product proposal system according to the present invention, the keywords including items, "preference in scent", "desired self-image", and "desired mood" are indicated on the screen for the user such that the use is prompted to select any one of the items.

In the fragrance product proposal system according to the present invention, when the item "preference in scent" is selected, a natural-related keyword, a feminine-related keyword, a sharp-related keyword, and a tender-related keyword are indicated on the screen.

In the fragrance product proposal system according to the present invention, the natural-related keyword is one of "unaffected", "clear", and "neat", the feminine-related keyword is one of "mature", "glamorous", and "sexy", the sharp-related keyword is one of "sharp" and "cool", and the tender-related keyword is one of "mild", "gentle", and "polished".

In the fragrance product proposal system according to the present invention, when the item "desired self-image" is selected, "fresh and active", "charming and refreshing", "cute and charming", "smart and intelligent", "orthodox beauty", "mild and gentle", "cool and sharp", "calm and mature", and "gentle and womanly" are indicated as the keywords on the screen.

In the fragrance product proposal system according to the present invention, when the item "desired mood" is selected, "energized" and "relaxed" are indicated as keywords on the screen.

### [Advantageous Effects of Invention]

In the fragrance product proposal system according to the present invention, a consumer is allowed to easily select a fragrance product optimum for the consumer from many commercially available fragrance products on the screen of a general-purpose computer such as a personal computer through a communication medium such as the Internet.

### [Brief Description of Drawings]

[Fig. 1]

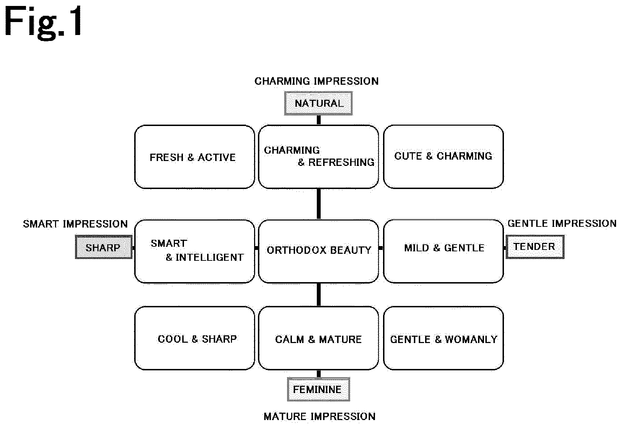

   Fig. 1 represents the "preference in scent" and the "desired self-image" indicated on a coordinate plane.
[Fig. 2]

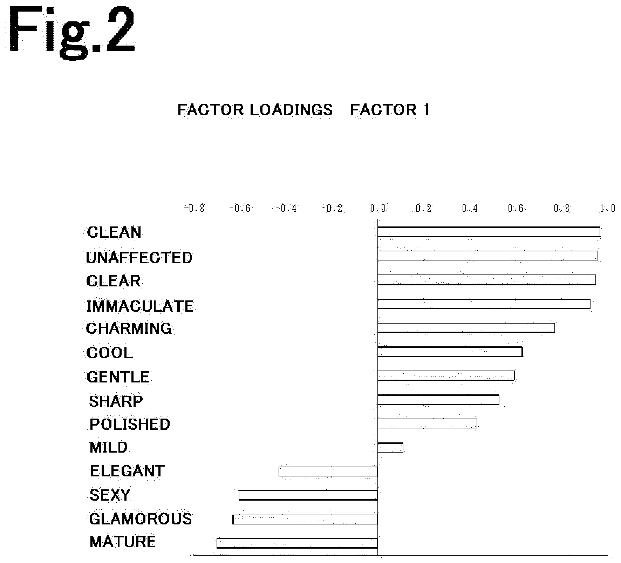

   Fig. 2 shows factor loadings obtained as a result of factor analysis.
[Fig. 3]

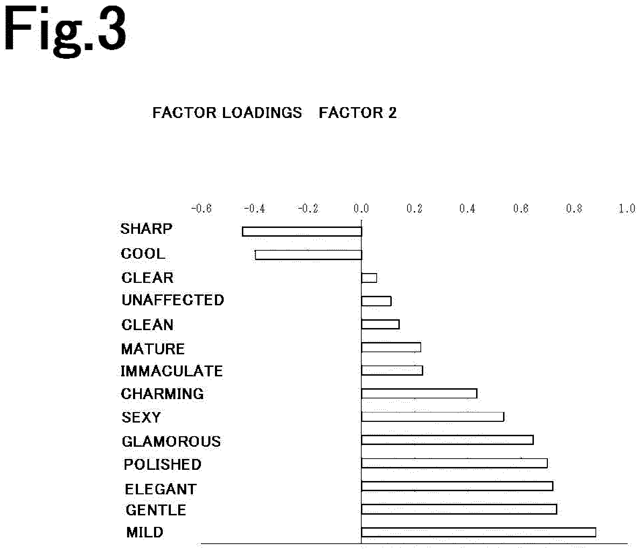

   Fig. 3 shows factor loadings obtained as a result of factor analysis.
[Fig. 4]

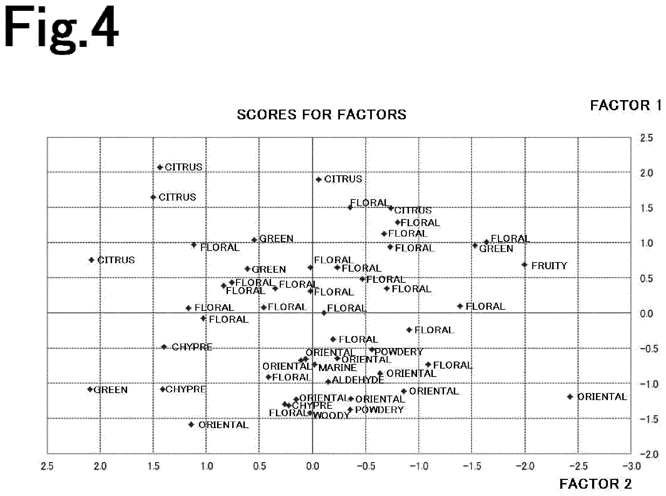

   Fig. 4 represents fragrance products plotted on the basis of scores for extracted factors.
[Fig. 5]

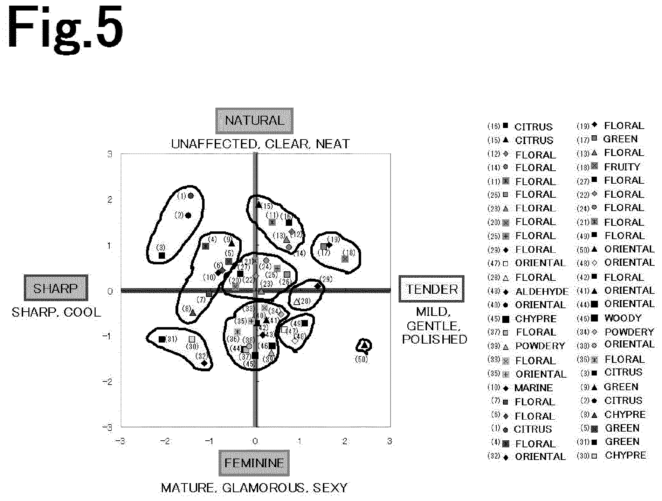

   Fig. 5 shows a cluster distribution of fragrance products.
[Fig. 6]

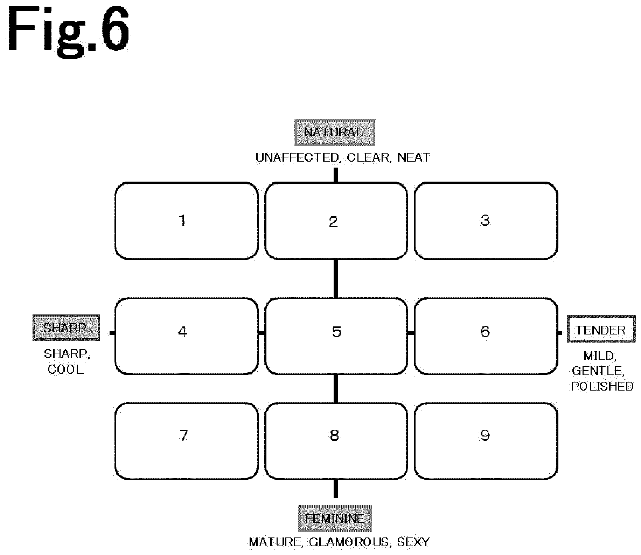

   Fig. 6 is a schematic diagram representing fragrance products which belong to the clusters.
[Fig. 7]

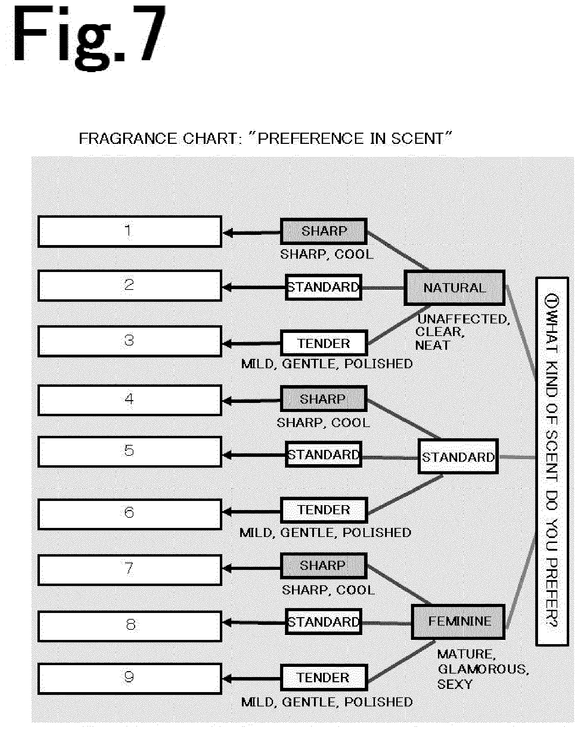

   Fig. 7 is a schematic diagram for proposing a fragrance product according to "preference in scent".
[Fig. 8]

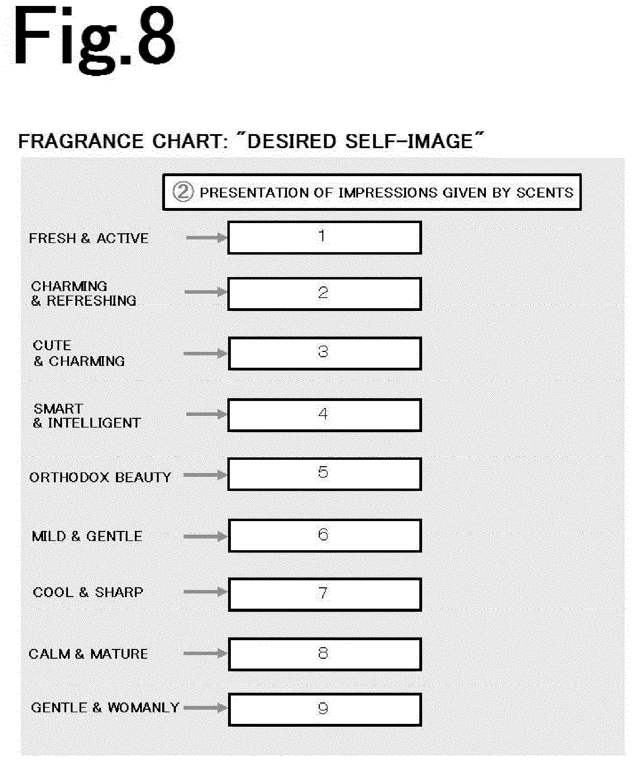

   Fig. 8 is a schematic diagram for proposing a fragrance product according to "desired self-image".
[Fig. 9]

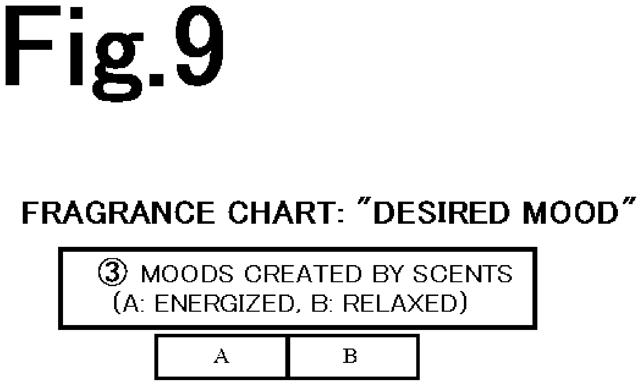

   Fig. 9 is a schematic diagram for proposing a fragrance product according to "desired mood".
[Fig. 10]

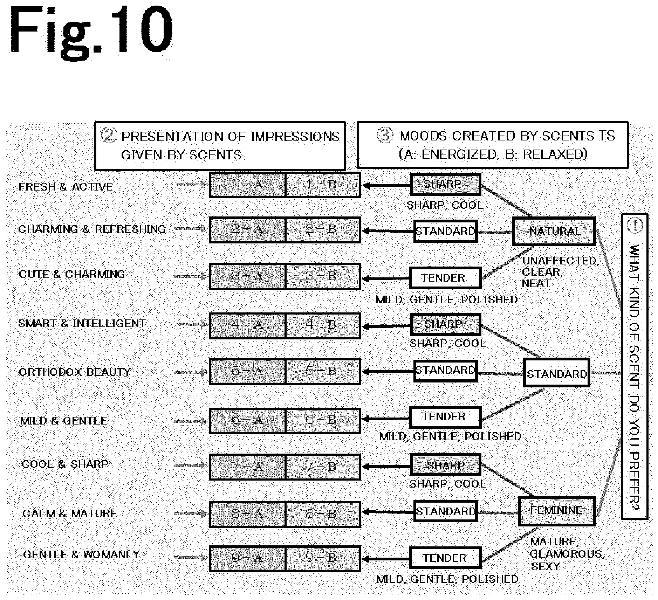

   Fig. 10 is a schematic diagram for proposing a fragrance product according to "preference in scent", "desired self-image", and "desired mood".

### [Description of Embodiments]

The fragrance product proposal system according to the present invention is a fragrance product proposal system for proposing a fragrance product to a user, the system implementing indicating at least two keywords simultaneously or sequentially on the screen of a user terminal, selecting one or more fragrance products from fragrance products stored in a database based on information input by the user, and displaying the selected one or more products on the screen of the user terminal.

In the fragrance product proposal system according to the present invention, at least two keywords are indicated simultaneously or sequentially on the screen of the user terminal, and therefore the user can easily understand information necessary for selecting a fragrance product. The user may need only to respond to the keywords by selecting "Yes" or "No", selecting one of the keywords, or clicking a corresponding position on the axial line with the two keywords at each end.

One or more fragrance products are selected from the fragrance products stored in the database based on the information input by the user and displayed on the screen of the user terminal.

While imaging "preference in scent", "desired self-image", and "desired mood", the user inputs information according to the keywords indicated on the screen, thereby allowing the user to easily select an optimum fragrance product. The fragrance product proposal system can be used at home or in a store using a general-purpose computer through a communication medium such as the Internet.

Examples of the keywords to be indicated on the screen of the user terminal in order to specify the "preference in scent" include "unaffected", "feminine", "sharp", and "tender". The words "unaffected" and "feminine" and the words "sharp" and "tender" are each a pair of keywords opposite in meaning, and a first axis (for example the ordinate) may be formed using the words "unaffected" and "feminine" while a second axis (for example the abscissa) may be formed using the words "sharp" and "tender", so that a coordinate plane using the four keywords may be indicated on the screen.

For example, the words "natural" and "feminine" which constitute the first axis may be indicated simultaneously or sequentially, and then the words "sharp" and "tender" which constitutes the second axis may be indicated simultaneously or sequentially, so that the user may be encouraged to input information.

The word "natural" includes a sense such as "neat", "clear", "clean", or "childish" in addition to "unaffected" while the word "feminine" includes a sense such as "mature", "glamorous", "sexy", and "rich". The words "natural" and "feminine" are not direct antonyms but these words are defined as being opposite on the basis of factor analysis about words representing impressions of fragrance products. The word "sharp" includes for example a sense of being "linear" and "cool", the word "tender" includes for example a sense of being "mild", "gentle", and "polished".

Therefore, in the fragrance product proposal system according to the present invention, a natural-related keyword may be one of "unaffected", "clear", and "neat", a feminine-related keyword may be one of "mature", "glamorous", and "sexy", a sharp-related keyword may be one of "sharp" and "cool", and a tender-related keyword may be one of "mild", "gentle", and "polished". Note however, the words do not have to be the same and may be replaced as appropriate with any other words having the similar meanings.

The keywords "natural, "feminine", "sharp", and "tender" expressing impressions of fragrance products were selected on the basis of the result of a panelist test conducted on 50 kinds of fragrance products.

As for the details of the panelist test, 310 panelists sniffed the 50 kinds of fragrance products (about five kinds of fragrance products per panelist), and evaluated the impression of each scent in 7 levels (1: strongly disagree, 2: disagree, 3: somewhat disagree, 4: neither agree nor disagree, 5: somewhat agree 6: agree, 7: strongly agree). The panelists who participated in this test were general users of fragrance products and are not particularly familiar with fragrance products or sensitive to scents.

In the panelist test, a plurality of words were prepared as impressions of scents, and the panelists were asked to score how much the impressions of the words are included for each scent. For example, for a particular scent, "gentleness" scored 5 points, "coolness" 1 point, "cleanliness " 2 points, and so on. At the time, a word expressing an impression of a scent to be scored is also an expression commonly used by users in general. The expressions used by the users as impressions of fragrance products included words such as "cool", "smart", "clear", "gentle scent", and "glamorous". These words were each used as an impression of a scent.

**[Table 1]**

| | Clear | Glamorous | Mild | Unaffected | Cool | Sexy | Polished | Clean | Sharp | Mature | Gentle | Charming | Clean | Elegant |
|---|---|---|---|---|---|---|---|---|---|---|---|---|---|---|
| Citrus | 5.23 | 3.93 | 4.60 | 5.03 | 4.60 | 3.83 | 5.10 | 5.50 | 4.47 | 4.37 | 4.97 | 4.67 | 5.50 | 4.80 |
| Citrus | 4.68 | 3.39 | 3.07 | 4.00 | 4.39 | 3.39 | 4.18 | 4.43 | 4.50 | 3.93 | 3.82 | 3.89 | 4.93 | 3.32 |
| Green | 3.53 | 3.70 | 3.30 | 3.13 | 4.63 | 4.07 | 3.80 | 3.27 | 4.43 | 5.43 | 3.23 | 2.37 | 3.60 | 4.50 |
| Floral | 4.21 | 4.64 | 4.57 | 3.32 | 3.68 | 5.04 | 4.89 | 4.07 | 3.86 | 5.25 | 4.46 | 3.93 | 3.93 | 5.00 |
| Marine | 4.69 | 3.72 | 4.28 | 4.17 | 4.28 | 3.69 | 4.31 | 4.28 | 3.86 | 4.28 | 4.17 | 3.86 | 4.45 | 4.00 |
| Floral | 5.10 | 4.14 | 5.00 | 4.90 | 3.59 | 4.41 | 4.97 | 5.00 | 3.79 | 4.48 | 5.28 | 4.90 | 5.34 | 5.07 |
| Floral | 4.28 | 3.83 | 4.14 | 4.21 | 4.03 | 3.52 | 4.45 | 4.38 | 3.90 | 4.48 | 4.52 | 4.31 | 4.41 | 4.07 |
| Green | 5.31 | 4.00 | 3.59 | 4.52 | 4.83 | 3.72 | 4.45 | 4.66 | 4.52 | 4.52 | 4.48 | 4.24 | 5.24 | 4.21 |
| Floral | 4.07 | 4.52 | 4.14 | 3.59 | 3.48 | 4.10 | 4.45 | 3.90 | 3.97 | 5.24 | 4.03 | 3.31 | 4.00 | 4.69 |
| Floral | 3.93 | 4.07 | 3.54 | 3.93 | 4.25 | 3.82 | 4.25 | 4.11 | 4.50 | 4.61 | 3.79 | 3.75 | 4.39 | 4.54 |
| Aldehyde | 3.84 | 4.48 | 4.06 | 3.45 | 3.68 | 4.84 | 4.26 | 3.71 | 3.68 | 5.19 | 4.06 | 3.45 | 3.74 | 4.94 |
| Oriental | 3.62 | 4.38 | 4.28 | 3.31 | 3.24 | 4.52 | 4.45 | 3.86 | 3.31 | 4.34 | 4.34 | 4.03 | 4.03 | 4.31 |
| Floral | 4.65 | 4.74 | 4.45 | 4.06 | 4.19 | 4.52 | 5.19 | 4.58 | 4.23 | 5.26 | 4.71 | 4.10 | 4.81 | 5.42 |
| Oriental | 3.13 | 4.47 | 3.57 | 2.70 | 3.80 | 4.47 | 4.00 | 3.30 | 3.90 | 5.23 | 3.43 | 2.40 | 3.40 | 4.37 |
| Oriental | 3.17 | 5.21 | 4.93 | 3.14 | 2.90 | 4.83 | 5.03 | 3.79 | 2.72 | 5.31 | 5.10 | 3.97 | 4.14 | 5.55 |
| Oriental | 3.81 | 4.52 | 4.10 | 3.58 | 3.58 | 4.23 | 4.10 | 3.81 | 3.52 | 4.74 | 4.23 | 3.32 | 4.13 | 4.58 |
| Oriental | 3.30 | 4.67 | 4.33 | 3.20 | 2.83 | 5.10 | 4.00 | 3.27 | 2.97 | 4.50 | 4.30 | 4.00 | 3.63 | 4.37 |
| Chypre | 3.43 | 4.46 | 3.52 | 3.14 | 3.86 | 4.68 | 4.43 | 3.14 | 4.11 | 5.25 | 3.75 | 3.29 | 3.64 | 5.07 |
| Woody | 3.48 | 5.07 | 3.93 | 3.17 | 3.97 | 4.76 | 4.62 | 3.59 | 3.83 | 5.52 | 3.62 | 2.38 | 3.72 | 4.97 |
| Citrus | 5.61 | 3.43 | 3.46 | 5.00 | 5.39 | 3.61 | 4.82 | 4.93 | 5.32 | 4.54 | 4.07 | 3.75 | 5.71 | 3.86 |
| Citrus | 5.64 | 3.76 | 4.24 | 5.28 | 4.64 | 3.72 | 4.72 | 5.40 | 4.60 | 4.64 | 5.08 | 4.72 | 5.88 | 3.92 |
| Floral | 4.57 | 3.83 | 4.23 | 4.27 | 4.30 | 3.70 | 4.33 | 4.20 | 4.33 | 4.53 | 4.23 | 3.87 | 4.67 | 4.13 |
| Chypre | 3.38 | 4.00 | 3.55 | 3.21 | 4.10 | 4.28 | 4.07 | 3.52 | 4.31 | 4.90 | 3.45 | 2.59 | 3.55 | 4.45 |
| Chypre | 4.04 | 3.89 | 3.39 | 3.50 | 4.00 | 3.75 | 4.21 | 3.79 | 4.75 | 5.04 | 3.64 | 2.96 | 4.14 | 4.25 |
| Green | 4.93 | 4.46 | 4.86 | 4.75 | 4.32 | 4.18 | 5.43 | 4.93 | 4.39 | 4.57 | 5.07 | 4.79 | 5.29 | 5.14 |
| Floral | 5.21 | 3.96 | 4.46 | 4.68 | 4.25 | 4.14 | 5.07 | 5.39 | 4.21 | 4.54 | 5.14 | 4.36 | 5.50 | 4.32 |
| Floral | 4.71 | 4.11 | 4.54 | 4.25 | 3.57 | 4.25 | 4.79 | 4.43 | 3.43 | 4.71 | 4.75 | 4.14 | 4.93 | 4.57 |
| Powdery | 3.76 | 4.69 | 4.07 | 3.90 | 4.00 | 4.66 | 4.97 | 4.14 | 4.03 | 5.59 | 4.21 | 3.41 | 4.41 | 5.07 |
| Powdery | 3.24 | 4.48 | 4.10 | 2.83 | 3.28 | 4.41 | 4.62 | 3.79 | 3.00 | 5.38 | 4.10 | 3.21 | 3.65 | 4.83 |
| Citrus | 5.62 | 3.24 | 3.62 | 5.24 | 4.59 | 3.14 | 3.93 | 5.03 | 4.31 | 3.17 | 4.48 | 5.17 | 5.76 | 3.62 |
| Floral | 4.17 | 4.23 | 3.87 | 4.43 | 3.77 | 3.90 | 4.57 | 4.63 | 3.67 | 4.53 | 4.33 | 4.10 | 4.80 | 4.50 |
| Floral | 3.75 | 4.04 | 3.89 | 3.79 | 3.00 | 3.89 | 4.29 | 4.39 | 2.96 | 4.21 | 4.54 | 4.61 | 4.68 | 4.36 |
| Floral | 4.83 | 4.13 | 4.47 | 4.40 | 4.20 | 3.93 | 4.63 | 4.57 | 4.27 | 4.70 | 4.67 | 4.20 | 4.97 | 4.47 |
| Floral | 5.54 | 4.11 | 4.43 | 5.04 | 4.25 | 4.04 | 4.96 | 4.93 | 4.07 | 4.64 | 4.93 | 4.36 | 5.18 | 4.36 |
| Floral | 5.10 | 4.10 | 4.45 | 4.38 | 3.79 | 4.00 | 5.03 | 5.21 | 3.83 | 4.31 | 4.72 | 4.76 | 5.28 | 4.59 |
| Oriental | 3.71 | 4.36 | 4.21 | 2.96 | 3.11 | 4.82 | 4.32 | 3.93 | 3.29 | 4.82 | 4.43 | 3.79 | 4.21 | 5.04 |
| Fruity | 4.96 | 5.19 | 5.26 | 4.56 | 3.89 | 4.74 | 5.33 | 5.07 | 3.74 | 4.59 | 4.93 | 5.07 | 5.19 | 4.96 |
| Floral | 4.25 | 3.82 | 3.82 | 3.93 | 4.00 | 4.14 | 4.25 | 4.32 | 4.00 | 4.82 | 4.43 | 3.64 | 4.50 | 4.21 |
| Oriental | 3.27 | 4.67 | 4.17 | 3.07 | 3.10 | 4.13 | 3.87 | 3.17 | 3.67 | 4.90 | 4.13 | 3.23 | 3.87 | 4.60 |
| Oriental | 3.77 | 5.37 | 4.20 | 3.43 | 4.13 | 5.43 | 4.43 | 3.40 | 4.00 | 5.57 | 4.27 | 3.50 | 3.97 | 5.17 |
| Floral | 3.71 | 4.64 | 4.64 | 4.14 | 3.68 | 4.32 | 4.61 | 4.18 | 3.75 | 4.86 | 4.68 | 4.25 | 4.29 | 4.89 |
| Floral | 5.14 | 3.90 | 4.24 | 4.24 | 4.24 | 4.41 | 4.52 | 4.55 | 4.24 | 4.69 | 4.45 | 4.00 | 5.17 | 4.69 |
| Floral | 5.39 | 3.64 | 4.43 | 4.93 | 4.21 | 3.86 | 4.86 | 5.32 | 4.32 | 4.29 | 5.04 | 4.61 | 5.46 | 4.18 |
| Floral | 4.45 | 4.41 | 4.24 | 3.55 | 4.10 | 5.03 | 4.76 | 4.14 | 4.55 | 5.52 | 4.21 | 3.34 | 4.38 | 4.59 |
| Floral | 3.18 | 4.46 | 4.29 | 3.21 | 2.93 | 4.04 | 4.00 | 3.75 | 3.18 | 5.14 | 4.04 | 2.86 | 3.46 | 4.29 |
| Floral | 3.36 | 4.18 | 3.68 | 3.18 | 3.71 | 4.50 | 4.50 | 4.21 | 3.64 | 5.32 | 3.89 | 2.71 | 4.07 | 4.61 |
| Oriental | 3.68 | 4.68 | 4.43 | 3.43 | 4.29 | 4.68 | 4.46 | 3.96 | 4.39 | 5.07 | 4.00 | 3.04 | 4.11 | 4.71 |
| Floral | 4.56 | 4.00 | 4.11 | 4.37 | 4.26 | 4.33 | 4.85 | 4.89 | 4.19 | 5.07 | 4.70 | 4.19 | 4.78 | 4.70 |
| Green | 4.97 | 3.73 | 3.57 | 4.60 | 4.93 | 4.30 | 5.03 | 4.67 | 4.93 | 5.03 | 3.97 | 3.30 | 5.00 | 4.80 |
| Floral | 4.79 | 3.41 | 3.62 | 4.48 | 4.48 | 4.17 | 4.48 | 4.83 | 4.59 | 4.14 | 4.14 | 4.17 | 5.03 | 3.93 |

The panelists' impressions of the scents of the fragrance products were represented by scores (Table 1) and the scores were subjected to factor analysis, so that the relation among the words was specified. The factor analysis is a statistical method for reducing the information of correlated variables to a small number of potential factors. The variables herein correspond to the average evaluation score of each of items. Therefore, the factor analysis allows correlated items to be put together and a small number of evaluation factors to be extracted.

A commercially available statistical analysis software, EXCEL multivariate analysis Ver 4.0 (manufactured by Esumi Co., Ltd.) was used for the factor analysis, the principal component method was specified as a method for the factor analysis, and the Varimax method was used for a rotation method. Note that the analysis method was based on "Data Analysis Technical Book for Psychology" (1st edition, 5th print, Kitaohji Shobo, May 25, 1994).

In the factor analysis, when there are two or more words with high scores for the same fragrance product, it is determined that these words are close to each other, while, conversely, when there are a word with a high score and a word with a low score for the same fragrance product, it is determined that these words are far from each other and opposite to each other.

**[Table 2]**

| | Factor 1 | Factor 2 |
|---|---|---|
| Clean | 0.9665 | -0.1417 |
| Unaffected | 0.9576 | -0.1109 |
| Clear | 0.9485 | -0.0577 |
| Clean | 0.9240 | -0.2300 |
| Charming | 0.7703 | -0.4343 |
| Cool | 0.6292 | 0.3972 |
| Sharp | 0.5268 | 0.4469 |
| Mild | 0.1096 | -0.8820 |
| Gentle | 0.5939 | -0.7343 |
| Elegant | -0.4294 | -0.7190 |
| Polished | 0.4321 | -0.6988 |
| Glamorous | -0.6290 | -0.6465 |
| Sexy | -0.6023 | -0.5345 |
| Mature | -0.7011 | -0.2238 |

The factor loadings clarify the positional relation among words that express multiple impressions, and as shown in Table 2, it was found that "natural (unaffected, clear, and neat)" and "feminine (mature, glamorous, and sexy) are positioned opposite to each other as a factor 1, and the words "tender (mild, gentle, and elegant)" and "sharp (sharp and cool)" are positioned opposite to each other as a factor 2 (see Figs. 2 and 3). In this way, the axis on the coordinate plane can be determined as the result of evaluation by many panelists.

The arrangement shown in Fig. 4 is obtained when the 50 kinds of fragrance products used in the panelist test are plotted on the basis of the factor scores on the coordinate plane which consist of the first axis (factor 1) using "unaffected" and "feminine" and the second axis (factor 2) using "sharp" and "tender" both obtained by the factor analysis, and it can be confirmed that all the fragrance products are distributed on the coordinate plane.

In this way, in order to specify the "preference in scent" of the user, the keywords "natural", "feminine", "sharp", and "tender" are simultaneously or sequentially indicated on the screen of the user terminal, and when information on the "preference in scent" is input by the user, a fragrance product on the coordinates which corresponds to the input information among the fragrance products distributed on the coordinates can be presented as an optimum fragrance product requested by the user.

From the evaluation results for the 50 kinds of fragrance products, the fragrance products were subjected to cluster analysis on the basis of similarities among a plurality of words that represent scent impressions. The cluster analysis is a multivariate method for analyzing whether a fragrance product is included in a cluster depending on the manner of affinity (similarity) among individuals. Fig. 5 shows a distribution of the fragrance products obtained by the cluster analysis.

As shown in Fig. 5, the fragrance products can be classified as nine clusters on a coordinate plane defined by the first axis using "unaffected" and "feminine" and the second axis using "sharp" and "tender", and these clusters may be roughly divided into the "upper left region, " the "upper central region", the "upper right region", the "middle left region", the "middle central region", the "middle right region", "lower left region", "lower central region", and the "lower right region" on the coordinate plane, so that examples of representative fragrance products which belong to these clusters can be indicated as nine regions designated by 1 to 9 in Fig. 6.

In addition, in the panelist test, the panelists were asked about the impression of a person wearing each fragrance product. When the result is summed up for each of the nine clusters, as in Fig. 1, the "upper left region" can be expressed as "fresh and active", the "upper central region" as "cute and refreshing", the "upper right region" as "cute and charming", the "middle left region" as "smart and intelligent", the "middle central region" as "orthodox beauty", the "middle right region" as "mild and gentle", the "lower left region" as "cool and sharp", the "lower central region" as "calm and mature", and the "lower right region" as "gentle and womanly".

In this way, "fresh and active", "charming and refreshing", "cute and charming", "smart and intelligent", "orthodox beauty", "mild and gentle", "cool and sharp", "calm and mature", and "gentle and womanly" can be used as keywords for specifying "desired self-image". Note however that these keywords do not have to be the same and may be replaced as appropriate with any other words having the similar meanings.

A user may want a fragrance product which allows the user to feel as if the user resembles the image of somebody the user admires. In this case, the user may be asked about "desired self-image" and for example when the user eventually selects, as a response, one of "fresh and active", "cute and refreshing", "cute and charming", "smart and intelligent", "orthodox beauty", "mild and gentle", "cool and sharp", "calm and mature", and "gentle and womanly", a fragrance product which belongs to the region corresponding to the selected keyword is the fragrance product requested by the user and can be presented as an optimum fragrance product for the "desired self-image".

Also in the panelist test, the panelists were asked about the mood when they sniffed the scent of each fragrance product. The panelists were asked to evaluate six items, "lively", "smart", "active", "restful", "calm", and "easy" in seven levels for each item (1: strongly disagree, 2: disagree, 3: somewhat disagree, 4: neither agree nor disagree, 5: somewhat agree, 6: agree, 7: strongly agree) and the results were summed up. The average values for the items "lively", "smart", and "active" were treated as the values for "energized", and the average values for the items "restful", "calm", and "easy" were treated as the values for "relaxed". The value for "energized" and the value for "relaxed" were compared for each fragrance product, and when the value for "energized" was high, the product was classified as a scent for an "energized" mood while when the value for "relaxed" was high, the product was classified as a scent for a "relaxed" mood (Table 3).

Therefore, the word "energized" is a keyword that collectively represents for example "lively, ""smart", "active", and the word "relaxed" is a keyword that collectively represents for example "restful", "calm", and "easy".

In the fragrance product proposal system according to the present invention, the keyword "energized" may be replaced with "lively", "smart", "active", and the word "relaxed" may be replaced with "restful", "calm", and "easy". These keywords do not have to be the same and may be replaced as appropriate with any other words having the similar meanings.

**[Table 3]**

| | Restful | Calm | Easy | Average value of 3 words relating to relaxed | | Lively | Smart | Active | Average value of 3 words relating to energized | | Value of (relax-related 3 words)-(energized-related 3 words) | mood |
|---|---|---|---|---|---|---|---|---|---|---|---|---|
| Citrus | 5.2 | 4.7 | 4.4 | 4.8 | | 5.0 | 5.1 | 4.9 | 5.0 | | -0.24 | energized |
| Citrus | 3.8 | 3.5 | 3.3 | 3.5 | | 4.7 | 4.4 | 4.8 | 4.6 | | -1.15 | energized |
| Green | 3.1 | 3.6 | 3.2 | 3.3 | | 3.3 | 3.8 | 3.8 | 3.6 | | -0.36 | energized |
| Floral | 4.6 | 4.8 | 4.6 | 4.7 | | 3.9 | 3.6 | 3.7 | 3.7 | | 0.95 | relaxed |
| Marine | 3.9 | 4.0 | 4.0 | 4.0 | | 3.9 | 4.1 | 4.1 | 4.1 | | -0.10 | energized |
| Floral | 5.1 | 4.9 | 4.9 | 4.9 | | 4.6 | 4.4 | 3.9 | 4.3 | | 0.63 | relaxed |
| Floral | 4.2 | 4.0 | 4.0 | 4.1 | | 4.0 | 4.1 | 4.2 | 4.1 | | -0.02 | energized |
| Green | 4.5 | 4.4 | 4.1 | 4.3 | | 4.7 | 5.2 | 4.7 | 4.9 | | -0.55 | energized |
| Floral | 3.9 | 4.2 | 4.0 | 4.1 | | 3.6 | 3.6 | 3.3 | 3.5 | | 0.54 | relaxed |
| Floral | 3.6 | 3.7 | 3.3 | 3.5 | | 3.6 | 3.8 | 4.2 | 3.9 | | -0.32 | energized |
| Aldehyde | 3.7 | 4.2 | 4.4 | 4.1 | | 3.3 | 3.3 | 3.3 | 3.3 | | 0.80 | relaxed |
| Oriental | 4.1 | 4.1 | 4.2 | 4.1 | | 3.8 | 3.0 | 3.5 | 3.4 | | 0.70 | relaxed |
| Floral | 4.7 | 5.0 | 4.8 | 4.8 | | 4.2 | 4.2 | 4.1 | 4.1 | | 0.70 | relaxed |
| Oriental | 3.1 | 3.7 | 3.7 | 3.5 | | 3.0 | 3.0 | 2.9 | 3.0 | | 0.56 | relaxed |
| Oriental | 4.7 | 5.0 | 5.0 | 4.9 | | 3.6 | 2.9 | 3.2 | 3.3 | | 1.66 | relaxed |
| Oriental | 3.6 | 4.2 | 3.8 | 3.9 | | 3.4 | 3.5 | 3.3 | 3.4 | | 0.46 | relaxed |
| Oriental | 3.8 | 3.8 | 4.0 | 3.9 | | 3.9 | 3.0 | 4.1 | 3.7 | | 0.18 | relaxed |
| Chypre | 3.3 | 3.9 | 3.8 | 3.7 | | 3.5 | 3.4 | 3.6 | 3.5 | | 0.18 | relaxed |
| Woody | 3.3 | 4.0 | 3.8 | 3.7 | | 3.1 | 3.3 | 3.3 | 3.2 | | 0.48 | relaxed |
| Citrus | 4.4 | 4.3 | 3.8 | 4.1 | | 5.0 | 5.3 | 5.4 | 5.2 | | -1.10 | energized |
| Citrus | 5.2 | 4.9 | 4.3 | 4.8 | | 5.4 | 5.5 | 5.2 | 5.4 | | -0.56 | energized |
| Floral | 4.0 | 4.4 | 4.0 | 4.2 | | 4.1 | 4.5 | 3.5 | 4.0 | | 0.12 | relaxed |
| Chypre | 3.4 | 3.7 | 3.7 | 3.6 | | 3.1 | 3.6 | 3.4 | 3.4 | | 0.25 | relaxed |
| Chypre | 3.2 | 3.6 | 3.8 | 3.5 | | 3.6 | 4.0 | 3.8 | 3.8 | | -0.30 | energized |
| Green | 5.0 | 5.1 | 4.5 | 4.9 | | 4.5 | 4.5 | 4.6 | 4.5 | | 0.33 | relaxed |
| Floral | 5.3 | 5.0 | 5.0 | 5.1 | | 4.2 | 4.8 | 4.0 | 4.3 | | 0.76 | relaxed |
| Floral | 4.1 | 4.4 | 4.5 | 4.3 | | 3.9 | 3.9 | 3.8 | 3.9 | | 0.44 | relaxed |
| Powdery | 3.8 | 5.1 | 4.5 | 4.5 | | 3.6 | 3.3 | 3.4 | 3.4 | | 1.05 | relaxed |
| Powdery | 3.6 | 4.1 | 3.8 | 3.9 | | 2.6 | 2.8 | 3.0 | 2.8 | | 1.06 | relaxed |
| Citrus | 4.4 | 4.0 | 4.0 | 4.1 | | 5.9 | 5.6 | 6.0 | 5.8 | | -1.69 | energized |
| Floral | 3.8 | 4.1 | 3.9 | 3.9 | | 3.5 | 3.8 | 3.3 | 3.6 | | 0.38 | relaxed |
| Floral | 3.9 | 4.0 | 3.8 | 3.9 | | 3.6 | 3.4 | 3.7 | 3.6 | | 0.32 | relaxed |
| Floral | 4.6 | 4.6 | 4.3 | 4.5 | | 4.7 | 4.2 | 4.6 | 4.5 | | 0.01 | relaxed |
| Floral | 4.8 | 4.4 | 4.6 | 4.6 | | 4.0 | 4.5 | 4.2 | 4.2 | | 0.35 | relaxed |
| Floral | 4.8 | 4.6 | 4.3 | 4.6 | | 4.7 | 4.4 | 4.5 | 4.5 | | 0.03 | relaxed |
| Oriental | 3.6 | 4.1 | 4.1 | 4.0 | | 3.8 | 3.6 | 3.6 | 3.7 | | 0.30 | relaxed |
| Fruity | 5.1 | 4.9 | 4.9 | 4.9 | | 4.5 | 4.4 | 4.4 | 4.4 | | 0.52 | relaxed |
| Floral | 4.0 | 4.5 | 3.5 | 4.0 | | 3.7 | 3.8 | 3.8 | 3.8 | | 0.25 | relaxed |
| Oriental | 3.4 | 4.0 | 4.1 | 3.9 | | 3.0 | 3.1 | 3.2 | 3.1 | | 0.77 | relaxed |
| Oriental | 4.1 | 4.4 | 4.2 | 4.2 | | 3.7 | 3.2 | 3.5 | 3.5 | | 0.76 | relaxed |
| Floral | 4.5 | 4.6 | 4.6 | 4.6 | | 4.0 | 3.8 | 4.1 | 4.0 | | 0.61 | relaxed |
| Floral | 4.8 | 4.8 | 4.5 | 4.7 | | 4.5 | 4.7 | 4.5 | 4.6 | | 0.15 | relaxed |
| Floral | 4.9 | 4.5 | 4.5 | 4.6 | | 4.8 | 5.2 | 4.9 | 4.9 | | -0.30 | energized |
| Floral | 4.1 | 4.4 | 4.1 | 4.2 | | 4.2 | 4.3 | 4.4 | 4.3 | | -0.09 | energized |
| Floral | 3.8 | 4.5 | 3.9 | 4.1 | | 2.9 | 3.1 | 3.0 | 3.0 | | 1.06 | relaxed |
| Floral | 3.2 | 4.1 | 3.4 | 3.6 | | 3.0 | 3.3 | 3.1 | 3.1 | | 0.43 | relaxed |
| Oriental | 3.8 | 4.3 | 3.9 | 4.0 | | 3.6 | 3.5 | 3.9 | 3.7 | | 0.30 | relaxed |
| Floral | 4.1 | 4.6 | 4.1 | 4.3 | | 4.2 | 4.3 | 4.1 | 4.2 | | 0.07 | relaxed |
| Green | 4.1 | 4.5 | 3.9 | 4.2 | | 4.3 | 5.1 | 4.7 | 4.7 | | -.54 | energized |
| Floral | 3.9 | 3.7 | 3.7 | 3.7 | | 4.7 | 4.8 | 5.1 | 4.9 | | -1.13 | energized |

In the fragrance product proposal system according to the present invention, at least two keywords are simultaneously or sequentially indicated on the screen of the user terminal, so that the user is encouraged to input information, one or more fragrance products are selected from the fragrance products stored in the database based on the information input by the user, and an optimum fragrance product for the user is proposed by displaying the selected products on the screen of the user terminal. An embodiment of the system will be described.

A user can select a fragrance product by selecting any of the items "preference in scent", "desired self-image", and "desired mood".

When the item "preference in scent" is selected, the words "natural" and "feminine" which form the first axis are simultaneously or sequentially indicated on the screen of the user terminal, and then "sharp" and "tender" are simultaneously or sequentially indicated as shown in Fig. 7, and information on the "preference in scent" of the user can be obtained as a response to the keyword input by the user. The fragrance products are distributed on the coordinate plane formed by the first axis using "natural" and "feminine", and the second axis using "sharp" and "tender", so that a fragrance product on the coordinates corresponding to the information input by the user may be presented on the screen as a fragrance product requested by the user.

When the user selects the item "desired self-image", as shown in Fig. 8, "fresh and active", "charming and refreshing", "cute and charming", "smart and intelligent", "orthodox beauty", "mild and gentle", "cool and sharp", "calm and mature", and "gentle and womanly" are indicated as keywords, and when the user selects one of the keywords, a fragrance product that belongs to the region corresponding to the keyword selected by the user among the nine regions can be proposed as an optimum fragrance product for the "desired self-image" requested by the user.

When the user selects the item "desired mood", the keywords "energized" and "relaxed" are indicated as shown in Fig. 9, and when the user selects one of the keywords, a fragrance product corresponding to "energized" or "relaxed" is displayed on the screen, so that the product can be proposed as a fragrance product requested by the user.

The information input by the user on the items "preference in scent", "desired self-image" and "desired mood" can be arranged in combination as shown in Fig. 10, and an optimum fragrance product requested by the user can be proposed.

## Claims

1. A fragrance product proposal system for proposing a fragrance product to a user, the system implementing:
indicating at least two keywords simultaneously or sequentially on a screen of a user terminal,
selecting one or more fragrance products from fragrance products stored in a database based on information input by the user, and
displaying the selected one or more products on the screen of the user terminal.

2. The fragrance product proposal system of claim 1, wherein the keywords including items, "preference in scent", "desired self-image", and "desired mood" are indicated on the screen for the user such that the user is prompted to select any one of the items.

3. The fragrance product proposal system of claim 2, wherein when the item "preference in scent" is selected, a natural-related keyword, a feminine-related keyword, a sharp-related keyword, and a tender-related keyword are indicated on the screen.

4. The fragrance product proposal system of claim 3, wherein the natural-related keyword is one of "unaffected", "clear" and "neat", the feminine-related keyword is one of "mature", "glamorous", and "sexy", the sharp-related keyword is one of "sharp" and "cool", and the tender-related keyword is one of "mild", "gentle", and "polished".

5. The fragrance product proposal system of claim 2, wherein when the item "desired self-image" is selected, "fresh and active", "charming and refreshing", "cute and charming", "smart and intelligent", "orthodox beauty", "mild and gentle", "cool and sharp", "calm and mature", and "gentle and womanly" are indicated as the keywords on the screen.

6. The fragrance product proposal system of claim 2, wherein when the item "desired mood" is selected, "energized" and "relaxed" are indicated as the keywords on the screen.
